# EUROPÄISCHE PATENTANMELDUNG

(11) **EP 1 168 500 A2**
(43) Veröffentlichungstag der Anmeldung: **02.01.2002**
(21) Anmeldenummer: 01113798.1
(22) Anmeldetag: 06.06.2001
(51) Int. Cl.: H01Q 21/30

(54) **Antennenumschalter für Sende-Empfangseinheiten in einer Mobilstation**

(30) Priorität: 30.06.2000 DE 10030982
(71) Anmelder: NOKIA MOBILE PHONES LTD., 02150 Espoo (FI)
(72) Erfinder: Schiller, Heiko, Dr. Ing., 89075 Ulm (DE)
(74) Vertreter: TER MEER STEINMEISTER & PARTNER GbR

(57) **Zusammenfassung**

Die Erfindung betrifft einen Antennenumschalter für Transceiver in einer Mobilstation, welche für einen Betrieb in mindestens zwei diskreten HF-Übertragungsbändern ausgelegt ist. Dafür werden häufig Diodenschalter (D1 bis D4) mit HF-Impedanztransformatoren (L1, L2) genutzt, welche zwischen Kanälen des GSM 900-Netzes und Kanälen des DCS 1800-Netzes umschalten. Aufgrund unzureichender Entkopplung zwischen den Transceivern wird ein beachtlicher Anteil des Sendesignals vom aktiven Transceiver (TX1 bzw. TX2) zum Antennenterminal des inaktiven Transceivers gelangen. Dabei kann insbesondere ein vom GSM900-Transceiver in das Antennenterminal (A2) des DCS1800-Transceivers eingekoppelter Anteil so groß sein, dass die dort angeschlossenen stromlosen Halbleiterbauelemente Oberwellen erzeugen. Das Problem wird gemäß der Erfindung dadurch gelöst, dass Steuerungsmittel (S1, S2) gleichzeitig im GSM 900-Transceiver die Schaltdioden (D1 und D2) sowie im anderen Transceiver eine Schaltdiode (D4), welche parallel zum Signaleingang der dortigen Empfangseinheit (RX2) liegt, mit einem Biasstrom leitend steuern.

## Beschreibung

Die Erfindung betrifft einen Antennenumschalter für Sende-Empfangseinheiten in einer Mobilstation, welche für einen Betrieb in mindestens zwei diskreten HF-Übertragungsbändern ausgelegt ist. Der Antennenumschalter wird besonders in Mobilstationen genutzt, welche beispielsweise sowohl Kanäle des GSM 900-Netzes mit Trägerfrequenzen um 900 MHz als auch Kanäle des DCS 1800-Netzes nutzen, deren Trägerfrequenzen bei 1800 MHz liegen. Eine Mobilstation im Sinne dieses Dokumentes kann ein Mobiltelefon, eine Telematikeinheit in einem Fahrzeug oder ein anderes mobiles Gerät mit einer Funknetzverbindung sein. Entsprechende Stationen werden auch als Dualband-, oder Multibandgeräte bezeichnet. Im folgenden wird die Sende-/Empfangseinheit als Receiver bezeichnet. Die Erfindung kann jedoch auch für Multibandgeräte mit anderen Übertragungsbändern angewendet werden.

Herkömmliche Mobiltelefone für digitale Funknetze nutzen häufig sowohl zum Senden als auch zum Empfangen in allen HF-Übertragungsbändern dieselbe Antenne, wenn die Übertragung im Zeitmultiplex-Betrieb erfolgt und beide Übertragungsrichtungen verschiedene Zeitschlitze benutzen. Ein Antennenumschalter ermöglicht den alternativen Betrieb der Antenne zum Senden und Empfangen.

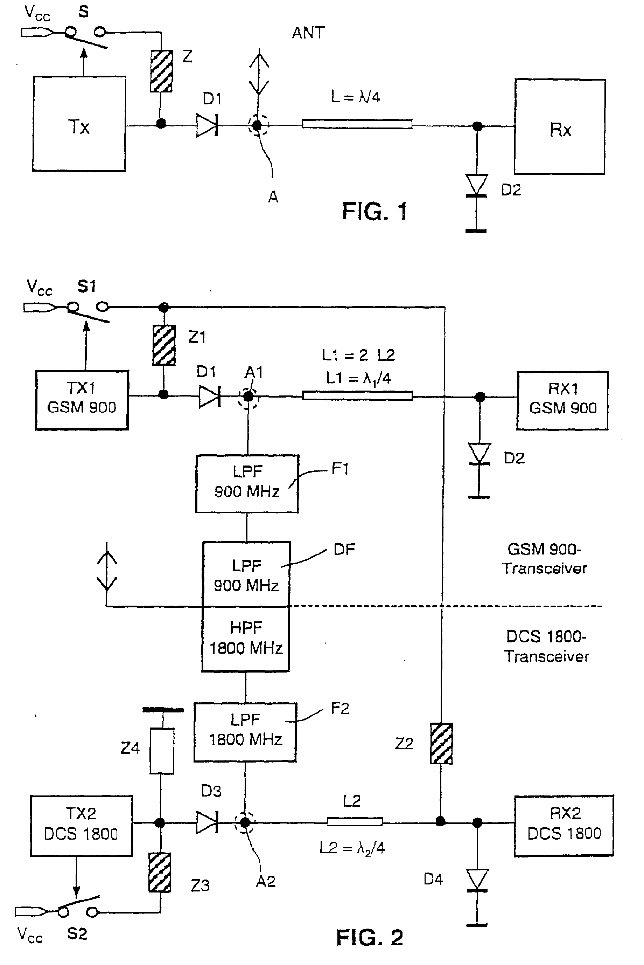

Wenn das Mobiltelefon nur für ein HF-Übertragungsband ausgelegt ist, enthält der Antennenumschalter einfache bekannte Diodenschalter. Eine solche bekannte Lösung zeigt FIG. 1. Eine Sendeeinheit TX stellt für die Verbindungsrichtung zum Funknetz, also während des Sendens, ein auf einem Träger moduliertes Sendesignal bereit. An einem Antennenterminal A ist eine Sende-Empfangsantenne ANT angeschlossen, die das modulierte Sendesignal zum Funknetz sendet. Dieselbe Antenne ANT empfängt auch für die Gegenrichtung der Verbindung vom Funknetz ein moduliertes Empfangssignal auf einem anderen Träger. Die Sendeeinheit TX ist über eine in Serie angeordnete Diode D1 mit dem Antennenterminal A verbunden, um ein Beeinflussen des Empfangssignals durch ihren Ausgang zu vermeiden. In Serie zum Eingang der Empfangseinheit RX liegt ein Transformationsglied L und parallel zum Eingang eine zweite Diode D2, welche ein Beeinflussen des Sendesignals vermeidet. Die Dioden D1, D2 weisen im Durchlasszustand, also während des Sendens, einen besonders niedrigen dynamischen Eigenwiderstand auf, um Leistungsverluste des Sendesignals gering zu halten. Es werden beispielsweise PIN-Dioden verwendet. Das Transformationsglied L ist ein auf das HF-Übertragungsband abgestimmter Zwei- oder Vierpol, der eine an einem Ende liegende HF-Impedanz zum anderen Ende so transformiert, dass bei einem Kurzschluss am anderen Ende ein Leerlauf wirkt und umgekehrt. Dieses ist beispielsweise mit L/C-Vierpolen zu erreichen. Vorteilhaft wird jedoch eine HF-Leitung mit einer Länge L=λ/4 benutzt, welche für Signale, die im Übertragungsband liegen, eine Signalreflexion mit einer Phasenverschiebung von 180° realisiert. Die Wellenlänge λ ist die mittlere Wellenlänge des HF-Übertragungsbandes. Befindet sich an einem Ende ein Abschlusswiderstand, so kann vom anderen Ende dorthin HF-Energie reflexionsfrei übertragen werden.

Eine Impedanz Z führt ein Schaltsignal zur Verbindung zwischen dem Ausgang der Empfangseinheit RX und dem Anschluss der Diode D1, welche in Serie zum Ausgang liegt. Das Schaltsignal wird zum Beispiel von einem Schalter S gesteuert, der im Sendemodus einen Biasstrom durch die Dioden schickt. Dadurch sind beide Dioden D1 und D2 leitend. Aufgrund der leitenden Diode D1 gelangt die HF-Ausgangsleistung der Sendeeinheit TX mit geringer Dämpfung zum Antennenterminal A, während die ebenfalls leitende Diode D2 den Eingang der Empfangseinheit RX kurzschließt. Die λ/4-Leitung L transformiert den Kurzschluß des Eingangs der Empfangseinheit RX in eine Leerlaufimpedanz, so dass die Verbindung vom Antennenterminal A zur Empfangseinheit RX praktisch unterbrochen ist und das Sendesignal nicht beeinflusst.

Im Empfangsmodus fehlt der Biasstrom, die Diode D1 unterbricht die Signalzufuhr zur Sende-Empfangsantenne ANT und die Diode D2 hebt den Kurzschluss am Eingang der Empfangseinheit RX auf. Das Empfangssignal von der Antenne ANT gelangt über die mit dem Eingangswiderstand der Empfangseinheit RX abgeschlossene λ/4-Leitung zum Empfänger RX. Die beschriebene Lösung ist unter anderem aus der DE 199 08 594 bekannt und funktioniert praktisch in jedem HF-Übertragungsband.

Die Serienschaltung der Dioden im Antennenumschalter hat für eine Mobilstation, welche von einer Batterie versorgt wird, einen entscheidenden Vorteil hinsichtlich des Bedarfs an Betriebsenergie. Nur im relativ kurzen Sendemodus fließt durch die Dioden ein Biasstrom. In der Regel befindet sich jedoch eine Mobilstation überwiegend im Standby-Betrieb und wartet auf den Empfang eines entsprechend adressierten Empfangssignals. Dieses gelangt zum Empfänger RX, ohne dass durch die Dioden ein Biasstrom fließt und senkt somit die Stromentnahme aus der Gerätebatterie im Empfangsmodus.

Ein Dualbandgerät, beispielsweise für die Kanäle des GSM 900- und des DCS 1800-Bandes, weist häufig für jedes Übertragungsband einen separaten Transceiver mit eigener Empfangseinheit RX1 oder RX2 und separater Sendeeinheit TX1 und TX2 auf, welche gemeinsam eine Sende-Empfangsantenne ANT nutzen. Jede der Empfangseinheiten ist mit der entsprechenden Sendeeinheit TX1 oder TX2 über einen Diodenschalter D1, D2, L1 oder D3, D4, L2 verbunden. Die Längen der λ/4-Leitungen L1 bzw. L2 in den Diodenschaltern entsprechen den mittleren Wellenlängen der Empfangskanäle des entsprechenden HF-Übertragungsbandes. D.H., die Leitung L1 ist etwa doppelt so lang wie die Leitung L2. Die Antennenausgänge A1 und A2 der Transceiver sind über ein sogenanntes Diplexfilter DF an die gemeinsame Antenne ANT geführt. Das Diplexfilter DF bildet zwischen Antenne ANT und dem GSM 900-Transceiver ein Tiefpassfilter und zum DCS 1800-Transceiver ein Hochpassfilter, entkoppelt beide Transceiver voneinander und verhindert bedingt einen Einfluss des inaktiven Transceivers auf das Sendesignal. Infolge der Selektivität des Diplexfilters DF gelangt ein im Empfangsmodus empfangenes Signal zur entsprechenden Empfangseinheit, ohne dass ein Biasstrom einen Umschalter betätigt. In jedem Transceiver befindet sich ein Schalter S1, S2, welcher mit einem Biasstrom die Diodenschalter D1, D2 oder D3, D4 in den Übertragungszweigen betätigt. Sofern die Mobilstation sendet, schließt eine Steuereinrichtung im Transceiver des aktiven HF-Übertragungsbandes den entsprechenden Schalter S1 oder S2, um die HF-Sendeleistung von der entsprechenden Sendeeinheit TX1 oder TX2 zur Antenne ANT zu führen.

Das Diplexfilter DF kann auch durch weitere Diodenschalter ersetzt werden. Diese würden jedoch einen zusätzlichen internen Verlust an HF-Sendeleistung im jeweils aktiven Sendezweig bewirken. Des weiteren müsste auch während des Empfangs der entsprechende Diodenschalter von der Antenne ANT zur entsprechenden Empfangseinheit durch einen Biasstrom geschlossen werden. Beides verringert die Betriebszeit der Mobilstation mit einer Akkuladung insbesondere während des Standby-Betriebes.

Die Schaltdioden im beschriebenen Antennenumschalter bereiten jedoch ein grundsätzliches Problem. Wenn die Signalamplitude des Sendesignals eine bestimmte Höhe überschreitet, entstehen infolge der unlinearen Übertragungskennlinien der Dioden im Sendesignal Oberwellen. Strahlt die Antenne ANT diese Oberwellen zusätzlich zum Sendesignal ab, so können andere Funkdienste dadurch beeinflusst werden. Dieses Problem besteht aufgrund des Verhältnisses der Kanalträgerfrequenzen beider HF-Übertragungsbänder zueinander, besonders beim Senden im GSM 900-Band. Dann liegt die erste Oberwelle der Sendefrequenz teilweise direkt auf einer Grundwelle des DCS 1800-Kanals.

Die GSM 900-Sendefrequenzen von Mobilstationen liegen beispielsweise zwischen 890 MHz und 915 MHz, während die DCS 1800-Empfangsfrequenzen zwischen 1805 MHz und 1880 MHz liegen. Deshalb fallen die ersten Oberwellen von einem Teil der GSM 900-Sendefrequenzen genau in den Bereich von DCS 1800-Empfangsfrequenzen. Das Problem steigt mit zunehmender Senderleistung, welche bei einem GSM 900-Mobiltelefon zwei Watt und bei einem Autotelefon sogar acht Watt betragen darf.

Die Praxis hat gezeigt, dass aufgrund unzureichender Entkopplung zwischen den Transceivern, welche durch den Aufbau und die Eigenschaften der Leiterplatte und des Diplexfilters bedingt ist, ein beachtlicher Anteil des Sendesignals vom aktiven Transceiver zum Antennenterminal des inaktiven Transceivers gelangt. Dabei kann insbesondere ein vom GSM900-Transceiver in das Antennenterminal A2 des DSC1800-Transceivers eingekoppelter Anteil so groß sein, dass die dort angeschlossenen stromlosen Halbleiterbauelemente, wie die Dioden D3, D4 und die internen Schaltungen von der Empfangseinheit RX2 oder der Sendeeinheit TX2, Oberwellen erzeugen. Da der Frequenzbereich der ersten Oberwellen und das DCS 1800-Übertragungsband teilweise gleich sind, kann kein Filter mehr verhindern, dass die erste Oberwelle vom Antennenterminal A2 zur Antenne ANT gelangt. Im umgekehrten Fall ist dieses Problem einfach, beispielsweise durch ein zusätzliches auf maximale Sendefrequenz des GSM900-Bandes abgestimmtes Tiefpassfilter zwischen dem Diplexfilter DF und dem Antennenterminal A1 zu lösen. Ein aufwendiges Bandfilter zwischen dem Antennenterminal A2 und der Antenne ANT oder ein Saugkreis am Antennenterminal A2 können zwar den Anteil des eingekoppelten GSM900-Signal verringern, erhöhen jedoch neben dem Schaltungsaufwand auch den Verlust an Sendeleistung im DCS1800-Band.

Ausgehend vom dargestellten Problem ist es Aufgabe der Erfindung, eine Lösung zu schaffen, welche das Entstehen von Oberwellen mit möglichst einfachen Mitteln und geringem Aufwand unterdrückt.

Zur Lösung der Aufgabe geht die vorliegende Erfindung von einem Antennenumschalter für Sende-Empfangseinheiten in einer Mobilstation der eingang beschriebenen Art aus. Der Umschalter weist einen Transceiver für ein oberes Übertragungsband und mindestens einen zweiten Transceiver für ein unteres Übertragungsband auf. Jeder Transceiver weist sowohl eine separate Sendeeinheit als auch eine separate Empfangseinheit sowie ein Antennenterminal auf. Außerdem enthält jeder Transceiver eine erste Schaltdiode, welche vom Antennenterminal in Serie zum Sendeausgang der Sendeeinheit liegt, und eine zweite Schaltdiode, welche parallel zum Signaleingang der Empfangseinheit liegt. Ein HF-Impedanztransformator, welcher vom Antennenterminal in Serie zum Eingang der Empfangseinheit liegt, transformiert für Signalfrequenzen im entsprechenden Übertragungsband einen Kurzschluss vom Signaleingang in einen Leerlauf am Antennenterminal. Jeder Transceiver enthält Steuerungsmittel, welche dann, wenn der Transceiver aktiv sendet, die ersten und zweite Schaltdiode durch einen Biasstrom in einen Leitzustand setzt, so dass der Signalausgang der aktiven Sendeeinheit über das Antennenterminal mit einer gemeinsamen Sende-Empfangsantenne verbunden und der Signaleingang der Empfangseinheit kurzgeschlossen ist.

Um einen Signalanteil zu unterdrücken, den der Transceiver des unteren Übertragungsbandes in das Antennenterminal des Transceivers für das obere Übertragungsband einkoppelt, steuern gemäß der Erfindung die Steuerungsmittel gleichzeitig im Transceiver des unteren Übertragungsbandes die erste und die zweite Schaltdiode sowie im anderen Transceiver die Schaltdiode, welche parallel zum Signaleingang der Empfangseinheit liegt, mit dem Biasstrom leitend.

### Die Lösung gemäß der Erfindung arbeitet somit wie folgt:

Während die Sendeeinheit im Transceiver des unteren Übertragungsbandes aktiv ist, sind die Signaleingänge von beiden Empfangseinheiten kurzgeschlossen. Gleichzeitig wird die Schaltdiode, welche in Serie zum Sendeausgang der Sendeeinheit für das obere Übetragungsband liegt, um die Größe einer Diodenflussspannung negativ vorgespannt. Das Transformationsglied im Transceiver des oberen Übertragungsbandes ist für das eingekoppelte Sendesignal aus dem unteren Übertragungsband fehlangepasst. Dieses verhindert, dass der Kurzschluss am Signaleingang der Empfangseinheit für das obere Übertragungsband in einen Leerlauf transformiert wird. Somit wird der im Antennenterminal eingekoppelte Signalanteil über das Transformationsglied und der leitenden Schaltdiode gegen Masse abgeleitet.

Außerdem werden durch diese Maßnahme für beide Schaltdioden im passiven Transceiver solche Biaswerte eingestellt, dass zum Entstehen von Oberwellen das eingekoppelte Signal wesentlich größere Signalamplituden aufweisen muss.

Details der Erfindung sollen nachstehend anhand von Zeichnungen erläutert werden. Die Zeichnungen zeigen im Einzelnen:
FIG. 1 einen Antennenumschalter für eine Ein-Band-Mobilstation gemäss des Standes der Technik
FIG. 2 einen Antennenumschalter für eine Dual-Band-Mobilstation mit der Lösung gemäss der Erfindung
FIG. 1 wurde eingangs hinreichend beschrieben, so dass weitere Ausführungen nicht nötig sind.

FIG. 2 zeigt über die bereits beschriebenen Funktionselemente hinaus zwei in Serie zu den Schaltern S 1 und S2 liegende Impedanzglieder Z1, Z3. Diese können im einfachsten Fall als R/C-Tiefpässe oder besser als L/R/C-Tiefpässe ausgeführt werden. Da die Impedanzglieder Z1, Z3 direkt am Sendeausgang der Sendeeinheiten liegen, muss ihre HF-Impedanz und die Dämpfung so hoch sein, dass an den mit Halbleiterbauelementen ausgeführten Schaltern S 1 und S2 keine Oberwellen entstehen können. Parallel zum Impedanzglied Z1 liegt ein zusätzliches Impedanzglied Z2. Dieses stellt den einzigen Mehraufwand dar, der zum Realisieren der Lösung gemäss der Erfindung benötigt wird. Im einfachsten Fall kann das Impedanzglied Z2 ein ohmscher Widerstand sein, da zum Realisieren der Tiefpassfunktionen die Impedanzglieder Z1 und Z2 HF-Kondensatoren gemeinsam nutzen können.

Ein Vorteil der Erfindung besteht somit darin, dass die Lösung gemäss der Erfindung mit minimalem Zusatzaufwand eine hohe Dämpfung des eingekoppelten Signalanteils erreicht.

Die Impedanzglieder Z1, Z2 und Z3 stellen außerdem die Biasströme der Schaltdioden ein. Eine andere Art zum Einspeisen der Biasströme ist denkbar. Da die Sendeleistungen der Sendeeinheiten jedoch relativ hoch sind, muss der Biasstrom zumindest für die Schaltdioden D1 und D3 entsprechend groß sein. Andernfalls würden Oberwellen entstehen. Im Interesse einer geringeren Stromaufnahme ist deshalb die vorliegende Reihenschaltung der Schaltdioden D1, D2 bzw. D3, D4 optimal. Aus gleichem Grunde kann das Impedanzglied Z2 so bemessen werden, dass der Strom durch die Diode kleiner ist als der durch die Dioden D1 und D2.

Zwischen dem Ausgang der Sendeeinheit TX2 und Masse kann noch ein hochohmiger Widerstand Z4 (>>50 Ohm) liegen, der dafür sorgt, dass die Diode D3 bei aktivem TX1 rückwärts vorgespannt wird. Er ist nicht notwendig, falls zufällig ein anderer DC-Pfad gegen Masse vorhanden ist.

Zum Vermeiden von Störungen außerhalb des genutzten HF-Übertragungsbandes während des Sendens liegen vorteilhaft zwischen den Receivern und dem Diplexfilter DF Tiefpassfilter F1 und F2, welche für die Grundwelle des entsprechenden Sendesignals eine geringe Dämpfung aufweisen, jedoch die Oberwellen wirksam unterdrücken. Dieses hat den Vorteil, dass die Maßnahme gemäss der Erfindung nur beim aktiven GSM 900-Transceiver angewendet werden muss. Wenn der DCS 1800-Transceiver aktiv ist, sorgt zum einen das Tiefpassfilter F1 dafür, dass die höherfrequente Grundwelle des DCS-Bandes mit höherer Dämpfung zum Antennenterminal A1 gelangt. Zum anderen unterdrückt das Tiefpassfilter F1 in der Richtung vom Antennenterminal A1 zur Antenne ANT die erste Oberwelle wirksam, welche bei 3600 MHz liegt.

Die Sendeeinheiten TX1, TX2 steuern im vorliegenden Beispiel die Schalter S1 und S2 vorteilhaft direkt.

## Patentansprüche

1. Antennenumschalter für Sende-Empfangseinheiten in einer Mobilstation mit einem ersten Transceiver für ein oberes Übertragungsband (DCS1800) und mindestens einem zweiten Transceiver für ein unteres Übertragungsband (GSM900), welche separat jeweils eine Sendeeinheit (TX1 oder TX2) und eine Empfangseinheit (RX1 oder RX2) aufweisen und außerdem enthalten:
eine erste Schaltdiode (D1 bzw. D3), welche in Serie zum Signalausgang der Sendeeinheit (TX1 bzw. TX2) liegt,
eine zweite Schaltdiode (D2 bzw. D4), welche parallel zum Signaleingang der Empfangseinheit (RX1 bzw. RX2) liegt,
einen HF-Impedanztransformator (L1 bzw. L2), welcher in Serie zum Signaleingang liegt und für Signalfrequenzen im entsprechenden Übertragungsband (GSM900 bzw. DCS1800) einen Kurzschluss des Signaleingangs in einen Leerlauf transformiert und
Steuermittel (S1, S2) zum Aktivieren eines Transceivers, welche beim Senden im aktiven Transceiver die erste und zweite Schaltdiode (D1, D2 oder D3, D4) durch einen Biasstrom leitfähig steuern, so dass der Signalausgang der aktiven Sendeeinheit (TX1 bzw. TX2) über ein Antennenterminal (A1 bzw. A2) und einen Umschalter (DF) mit einer gemeinsamen Sende-Empfangsantenne verbunden und der Signaleingang der Empfangseinheit (RX1 bzw. RX2) kurzgeschlossen ist, wobei
die Steuerungsmittel (S1) so ausgeführt sind, dass sie gleichzeitig die Schaltdioden (D1, D2) im Transceiver des unteren Übertragungsbandes (GSM900) sowie die Schaltdiode (D4), welche im Transceiver des oberen Übertragungsbandes (DCS1800) parallel zum Signaleingang der Empfangseinheit (RX2) liegt, leitend steuern.

2. Antennenumschalter nach Anspruch 1, **gekennzeichnet dadurch, dass** die Impedanztransformatorglieder (L1, L2) verschiedene λ/4-Leitungen sind, welche im Wesentlichen auf die mittlere Trägerfrequenz der Sendefrequenzen des entsprechenden Übertragungsbandes (GSM 900 bzw. DCS 1800) abgestimmt sind.

3. Antennenumschalter nach Anspruch 1, **gekennzeichnet dadurch, dass** mindestens zwischen dem Antennenterminal (A1) des Transceivers für das untere Übertragungsband (GSM900) und dem Umschalter (DF) ein Tiefpassfilter (F1) liegt, welches für die Grundwelle des Sendesignals im unteren Übertragungsband (GSM900) eine geringe Dämpfung aufweist, aber dessen Oberwelle bereits wirksam unterdrückt.

4. Antennenumschalter nach Anspruch 1, **gekennzeichnet dadurch, dass** durch ein Schaltsignal der jeweils aktiven Sendeeinheit (TX1 oder TX2) die Biasströme für die Schaltdioden (D1 - D4) geliefert werden.

5. Antennenumschalter nach einem der Ansprüche 1 bis 4, **dadurch gekennzeichnet, dass** der Umschalter ein Halbleiter-Umschalter ist.

6. Antennenumschalter nach einem der Ansprüche 1 bis 4, **dadurch gekennzeichnet, dass** der Umschalter als Diplexfilter (DF) ausgebildet ist.
